Europäisches Patentamt

European Patent Office

Office européen des brevets

(19)

(11) Veröffentlichungsnummer: **0 160 232 B1**

(12)
# EUROPÄISCHE PATENTSCHRIFT

(45) Veröffentlichungstag der Patentschrift: **23.10.91**

(51) Int. Cl.⁵: **C03C 13/00**

(21) Anmeldenummer: **85104062.6**

(22) Anmeldetag: **03.04.85**

(54) **Hochtemperaturbeständiges Siliciumdioxidfasermaterial.**

(30) Priorität: 04.05.84 DE 3416503
25.03.85 DE 3510753

(43) Veröffentlichungstag der Anmeldung:
06.11.85 Patentblatt 85/45

(45) Bekanntmachung des Hinweises auf die
Patenterteilung:
23.10.91 Patentblatt 91/43

(84) Benannte Vertragsstaaten:
**DE FR**

(56) Entgegenhaltungen:
**BE-A- 522 272**
**FR-A- 2 302 978**
**US-A- 3 356 563**
**US-A- 3 454 453**

(73) Patentinhaber: **Akzo Patente GmbH**
**Postfach 10 01 49 Kasinostrasse 19-23**
**W-5600 Wuppertal-1(DE)**

(72) Erfinder: **Wegerhoff, Arno, Dr. Dipl.-Chem.**
**Kronbergstrasse 7**
**W-8761 Wörth(DE)**
Erfinder: **Achtsnit, Hans-Dieter, Dr.**
**Dipl.-Chem.**
**Am Sonnenberg 17**
**W-8751 Elsenfeld-Eichelsbach(DE)**

## Beschreibung

Die Erfindung betrifft hoohtemperaturbeständiges Siliciumdioxidfasermaterial wie Stapelfasern, Fasermatten, Platten und andere Formteile, die Siliciumdioxidfasern mit einem sehr hohen Siliciumdioxidgehalt enthalten, die sich durch gute Hochtemperatureigenschaften, insbesondere bei Temperaturen bis etwa 1500° C und darüber auszeichnen und die durch Trockenverspinnen von Wasserglas zu Wasserglasfasern und Umwandlung der Wasserglasfasern in Kieselsäurefasern und anschließende Dehydratisierung erhalten worden sind.

Siliciumdioxidfasern mit einem hohen Siliciumdioxidgehalt sind bereits seit langem bekannt. So ist es möglich, aus reinem Quarz Fasern herzustellen, wozu jedoch sehr hohe Temperaturen erforderlich sind. Dieses Verfahren ist sehr energieintensiv. Auch sind die dazu benötigten Apparaturen wegen des hohen Schmelzpunkts von Quarz sehr aufwendig, so daß schmelzgesponnene Siliciumdioxidfasern schließlich mit sehr hohen Herstellungskosten belastet sind.

Durch Auslaugen mittels Säuren ist es möglich, aus Glasfasern einen großen Teil des Natriumoxids und anderer Oxide, außer Siliciumdioxid, zu entfernen. Die dabei entstehenden Fasern lassen jedoch, was ihre mechanischen Eigenschaften betrifft, zu wünschen übrig; dies gilt insbesondere auch für ihre Beständigkeit bei sehr hohen Temperaturen.

Man hat zwar bereits versucht, die verschiedensten anorganischen Fasern, die entweder nur zum Teil oder in der Hauptsache aus Siliciumdioxid bestehen, durch Nachbehandlung mit einer Reihe von Behandlungsmitteln in ihren Eigenschaften zu verbessern. Auch führten einige dieser Verfahren zur Verbesserung der Temperaturbeständigkeit.

So beschreibt die DE-OS 2 925 447 ein Verfahren, bei dem Glasfasern während oder nach ihrer Extraktion mit Kieselsäure als Polykieselsäure in kolloidaler oder suspendierter Form oder mit gelösten Salzen der Kieselsäure behandelt werden, um den $SiO_2$-Gehalt der Glasfasern zu erhöhen. Dabei sollen die Zug- und Knickfestigkeit erhöht werden. Auch wird durch dieses Verfahren die Temperaturbeständigkeit der Fasern verbessert. Fasern, welche jedoch noch gute Eigenschaften bei Temperaturen um 1500° C aufweisen, werden auf diese Weise nicht erhalten.

In der US-PS 4 362 768 wird ein Verfahren beschrieben, bei dem man Glasfasern mit einem speziellen Auslaugemittel, nämlich Tetrahydrofuran-2,3,4,5-tetracarbonsäure ausgelaugt werden. Nach dem Trocknen werden diese Fasern mit kolloidaler Kieselsäure behandelt und sodann einer zusätzlichen Behandlung mit einer wäßrigen Lösung unterzogen, die Salze von Metallen, wie Chrom, Aluminium, Zircon, Titan und Metallen der Gruppe II des Periodensystems enthält. Die so nachbehandelten Fasern werden getrocknet; sie behalten auch nach einer Behandlung bei Temperaturen von z.B. 871° C ihre Flexibilität. Hinweise zur Herstellung von Fasern mit extrem hoher Temperaturbeständigkeit, d.h. für Einsatzzwecke, z.B. bei 1500° C sind dieser US-PS jedoch nicht zu entnehmen. Im übrigen dienen all diese Behandlungen, insbesondere der Einsatz von Chromverbindungen dazu, den Glascharakter der Fasern zu erhalten und eine Kristallisation zu vermeiden.

In der DE-PS 20 41 321 wird ein Verfahren zur Herstellung von Siliciumdioxidfasern durch Verspinnen von hydrolisierten Tetraalkoxysilanen oder hydrolisierten Alkoxypolysiloxanen in Gegenwart von gelöstem Polyäthylenoxid beschrieben; diese Fasern behalten jedoch, wie dort angegeben, selbst bei Wärmebehandlungen bis zu 1500° C ihre amorphe Struktur bei.

Auch in der DE-OS 26 09 419 werden siliciumdioxidhaltige Fasern beschrieben, die einen sehr hohen Devitrifikationswiderstand besitzen, d.h. im wesentlichen amorph bleiben.

Aus diesen oben erwähnten Schriften ist zu entnehmen, daß bisher die Cristobalitbildung als unerwünscht galt.

Es gibt ferner zahlreiche Hinweise in Zeitschriften und Patentliteratur, anorganische Fasern mit den verschiedensten Mitteln nachzubehandeln, auch werden Fasermaterialien beschrieben, in denen die Fasern durch einen Binder zusammengehalten werden.

So werden in der DE-AS 24 46 278 Faserverbundstoffe beschrieben, die einen Binder auf der Basis von kolloidalem Siliciumdioxid und einer Matrix auf Basis von Siloxanen enthalten. Die dort beschriebenen Faserverbundstoffe können auch Cellulosefasern enthalten, so daß ein Einsatz dieser Faserverbundstoffe im Hochtemperaturbereich nicht infrage kommt.

In der britischen Patentanmeldung Nr. 20 47 297 werden Fasermaterialien beschrieben, bei denen man von anorganischen Stapelfasern mit vorzugsweise polykristalliner Struktur ausgeht, wie Aluminiumoxidfasern, Aluminiumsilikatfasern, Zirkonoxidfasern, Eisenoxidfasern oder Metallfasern. Als Bindemittel sollen Phosphorsäuren, Phosphate, Kieselsole oder Aluminiumchlorhydrate verwendet werden. Hinweise, ein hochtemperaturbeständiges Fasermaterial ausgehend von amorphen Siliciumdioxidfasern herzustellen, können dieser Patentanmeldung nicht entnommen werden.

Um auch bei sehr hohen Temperaturen dimensionsstabile Formteile zu erhalten, müssen nach dem Stand der Technik polykristalline Fasern, die zumindest zu einem großen Teil aus Aluminiumoxid bestehen, eingesetzt werden.

So werden in der vorstehend erwähnten britischen Patentanmeldung Nr. 20 47 297 in Beispiel 9 bei 1400°C dimensionsstabile Platten aus polykristallinen, 95% Aluminiumoxid enthaltenden Fasern (Saffil) beschrieben. Die zur Herstellung dieser Isolierstoffe benötigten Aluminiumoxidfasern sind jedoch teuer. Man hat deshalb versucht, diese polykristallinen Fasern ganz oder teilweise durch sogenannte keramische Fasern zu ersetzen, wobei man als keramische Fasern aus der Schmelze hergestellte, amorphe im wesentlichen aus z.B. etwa gleichen Anteilen Siliciumdixodid und Aluminiumoxid bestehenden Fasern, bezeichnet werden. Es wird zwar so eine wesentliche Verbilligung der Isolierstoffe erzielt, man muß aber dann eine verminderte Hochtemperaturbeständigkeit in Kauf nehmen.

Obwohl bereits zahlreiche Verfahren zum Nachbehandeln von anorganischen Fasern bekannt sind und es ferner bekannt ist, aus derartigen Fasern Materialien wie Fasermatten, Platten und andere Formteile herzustellen, besteht noch ein Bedürfnis nach hochtemperaturbeständigem Fasermaterial, das auf einfache und kostengünstige Weise zugänglich ist, das bei hohen Temperaturen, insbesondere bei Temperaturen um 1500°C und darüber beständig ist, einen niedrigen Schrumpf aufweist und weniger zur Versprödung neigt.

Aufgabe der Erfindung ist es, ein hochtemperaturbeständiges Fasermaterial und ein Verfahren zur Herstellung desselben zur Verfügung zu stellen, das bei Temperaturen um 1500°C schrumpfarm ist, eine geringe Neigung zur Versprödung zeigt und das für einen Dauereinsatz bei erhöhten Temperaturen geeignet ist und somit als Hochtemperaturisoliermaterial verwendet werden kann.

Aufgabe der Erfindung ist es ferner, ein derartiges Fasermaterial zur Verfügung zu stellen, das nicht über einen Schmelzspinnprozeß hergestellt werden muß und nicht, wie es bei Glasfasern der Fall ist, noch ausgelaugt werden muß, um den Gehalt an Nichtalkalioxiden zu reduzieren.

Aufgabe der Erfindung ist es ferner ein Verfahren zur Herstellung von hochtemperaturbeständigem Fasermaterial mit konstanten, reproduzierbaren Eigenschaften zur Verfügung zu stellen, das im übrigen mit wesentlich reduziertem Energieeinsatz arbeitet.

Diese Aufgabe wird gelöst durch ein hochtemperaturbeständiges Siliciumdioxid-Fasermaterial aus durch Trockenverspinnen einer Lösung von Wasserglas, bei der das Verhältnis von $Na_2O$ zu $SiO_2$ in einem Bereich von 1 : 3 bis 1 : 1,9 liegt und die frei ist von Nichtalkalimetallverbindungen, zu Wasserglasfasern und Umwandlung der Wasserglasfasern in Kieselsäurefasern durch Behandeln mit wäßrigen wasserstoffhaltigen Säuren oder Salzlösungen und anschließende Dehydratisierung erhaltenen Siliciumdioxid-Fasern mit einem Siliciumdioxid-Gehalt von mehr als 95 Gew.-%, einer Dichte von 1,9 bis 2,4 $g/cm^3$, einem Gehalt von mikrokristallinem Cristobalit von mehr als 5%, und einem Hochtemperaturschrumpf, bestimmt als Flächenschrumpf aus einem aus den Siliciumdioxidfasern bestehenden Vlies nach einer einstündigen Behandlung bei 1500°C, von weniger als 5 %. Vorzugsweise beträgt der Hochtemperaturschrumpf weniger als 3 %. Es ist besonders vorteilhaft, wenn die Siliciumdioxidfasern einen Cristobalitgehalt von mehr als 10% aufweisen. Es ist günstig, wenn die Siliciumdioxidfasern einen Siliciumdioxidgehalt von mehr als 98, insbesondere von mehr als 99 Gew.-% besitzen.

Zur Herstellung eines derartigen Fasermaterials kann ein Verfahren dienen, das dadurch gekennzeichnet ist, daß man Wasserglas, das frei von Nichtalkalimetallverbindungen ist und ein molares Verhältnis von $Na_2O$ : $SiO_2$ von 1 : 3 bis 1 : 1,9 aufweist, nach dem Trockenspinnverfahren zu Wasserglasfasern verspinnt, die Wasserglasfasern zur Umwandlung des Natriumsilicats in Kieselsäure mit wäßrigen, wasserstoffionenhaltigen Säure- oder Salzlösungen behandelt, die so erhaltenen Kieselsäurefasern wäscht, mit einem die Bildung von Cristobalit aus amorpher Kieselsäure beschleunigenden Mittel behandelt, die Fasern gegebenenfalls zu einem Formkörper verarbeitet, trocknet und bei Temperaturen über 600°C dehydratisiert. Es ist vorteilhaft, wenn man die Kieselsäurefasern nach dem Waschen in noch feuchtem Zustand mit dem die Bildung von Cristobalit beschleunigenden Mittel behandelt. Die Dehydratisierung wird vorteilhaft bei Temperaturen über 900°C, insbesondere bei Temperaturen von 950 bis 1050°C durchgeführt. Es ist günstig, wenn man die Kieselsäurefasern nach dem Einwirkenlassen des Behandlungsmittels durch Mikrowellenbestrahlung trocknet. Als Mittel, das die Bildung von Cristobalit aus amorpher Kieselsäure beschleunigt, sind im Rahmen der Erfindung insbesondere Alkalimetallsalze mit Anionen geeignet, die ein Element aus der vierten bis siebten Hauptgruppe des Periodensystems enthalten. Von den Alkalimetallsalzen mit Anionen, die ein Element aus der vierten bis siebten Hauptgruppe des Periodensystems enthalten, sind wäßrige Lösungen von Hydrogenphosphaten besonders geeignet, die auf einen pH-Wert von 5-8 eingestellt sind.

Es ist vorteilhaft, wenn man die Kieselsäurefasern vor dem Dehydratisieren zu einem Vlies oder einer Platte formt.

Eine weitere vorteilhafte Ausführungsform des erfindungsgemäßen Verfahrens zur Herstellung des hochtemperaturbeständigen Siliciumdioxytfasermaterials ist dadurch gekennzeichnet, daß daß Wasserglas, das frei von Nichtalkalimetallverbindungen ist und ein molares Verhältnis von $Na_2O : SiO_2$ von 1 : 3 bis 1 : 1,9 aufweist, nach dem Trockenspinnverfahren zu Wasserglasfasern verspinnt, die Wasserglasfasern zur Umwandlung des Natriumsilicats in Kieselsäure mit wäßrigen, wasserstoffionenhaltigen Säure- oder Salzlösungen behandelt, die so erhaltenen Kieselsäurefasern bei Temperaturen über 600°C dehydratisiert, dann mit einem die Cristobalitbildung beschleunigenden Mittel behandelt und bei Temperaturen über 400°C zur Auslösung der Kristallisation thermisch nachbehandelt.

Eine bevorzugte Ausführungsform besteht darin, auf Stapellängen von ca. 80 - 2000 µm vermahlene und dehydratisierte Kieselsäurefasern in der wäßrigen Lösung des Behandlungsmittels zu dispergieren, durch Filtration z.B. einer Platte zu formen und nach dem Trocknen die Kristallisation zu Cristobalit auszulösen.

Das Siliciumdioxidfasermaterial gemäß der Erfindung ist besonders für die Hochtemperaturisolierung geeignet.

Die Durchführung des Verfahrens zur Herstellung der erfindungsgemäßen Fasern kann auf folgende Weise geschehen.

Zunächst wird eine Wasserglaslösung hergestellt, bei der das molare Verhältnis von $Na_2O$ : $SiO_2$ in einem Bereich von etwa 1 : 3 bis 1 : 1.9 liegt. Aus diesen Wasserglaslösungen werden durch ein Trockenspinnverfahren zunächst Wasserglasfasern hergestellt, die sodann durch Behandlung mit wäßrigen wasserstoffionenhaltigen Säure- oder Salzlösungen in Kieselsäurefasern umgewandelt werden. In diesem Zusammenhang wird auf die deutschen Patentanmeldungen P 29 00 990.3-43 und P 29 00 991.4-43 verwiesen, auf deren Offenbarung sich hier ausdrücklich bezogen wird.

Die erhaltenen Kieselsäurefasern werden gewaschen und dann vorzugsweise ohne vorherige Trocknung mit einem Mittel behandelt, das die Bildung von Cristobalit aus amorpher Kieselsäure beschleunigt.

Die Nachbehandlung kann auf die Weise geschehen, daß man die noch feuchten Kieselsäurefasern, die vorzugsweise als Stapelfasern oder als Kurzschnitt vorliegen, in einem Bad behandelt, welches das Mittel enthält. Zu Stapelfasern oder Kurzschnitt wird das zunächst als Filamente vorliegende Kieselsäuregespinst durch Zerschneiden mit Hilfe von an sich üblichen Schneidewerkzeugen oder durch Reißen oder durch Vermahlen, insbesondere durch Naßvermahlen verarbeitet. Die Kieselsäurefasern können dann als Flocke, z.B. in größeren Behältern behandelt werden, wobei darauf zu achten ist, daß die Flocke nicht zu dicht gepreßt ist, damit die Behandlungsflüssigkeit die Fasern vollständig benetzt.

Im allgemeinen reicht bereits eine kurze Behandlungsdauer, z.B. 1/2 Minute aus, um die Fasern ausreichend zu imprägnieren. Anschließend wird die Flocke von der überschüssigen Behandlungsflüssigkeit befreit. Die nicht getrockneten Kieselsäurefasern können bereits in der Behandlungsflüssigkeit dispergiert und sodann als Dispersion direkt zu der Form verarbeitet werden, in der man das Siliciumdioxid-Fasermaterial einsetzen will. So kann die Dispersion nach einem Verfahren, wie es in der Papierindustrie üblich ist, zu Naßvliesen verarbeitet werden. Auf dem Sieb wird sodann die Behandlungsflüssigkeit entfernt und das Vlies dann der Trocknung und Dehydratisierung zugeführt. Man kann die mit Behandlungsflüssigkeit imprägnierten Fasern auch zu Formkörpern verarbeiten, z.B. durch Pressen zu Platten oder auch zu profilierten Formkörpern. Das noch feuchte Material wird anschließend getrocknet. Sehr geeignet zur Trocknung ist eine Mikrowellenbestrahlung, die eine besonders gleichmäßige Trocknung bewirkt und die dadurch vermeidet, daß sich beim Trocknen das Mittel ungleich verteilt.

Die Fasern werden sodann einer Dehydratisierung bei Temperaturen über 600°C unterzogen. Bei dieser Dehydratisierungsbehandlung bilden sich aus der amorphen Kieselsäure mikrokristalline Cristobalitbereiche.

Als Mittel, welche gemäß der Erfindung die Bildung von mikrokristallinen Cristobalitbereichen aus amorpher Kieselsäure beschleunigen, sind besonders geeignet:
Alkaliphosphate, insbesondere die Hydrogenphosphate, wie Natriummonohydrogenphosphat und Natriumbihydrogenphosphat, auch sind die entsprechenden Kaliumhydrogenphosphate sehr geeignet, ferner Natriumacetat, Natriumchlorid, Lithiumchlorid, Lithiumnitrat u.a. mehr.

Es ist auch möglich, Mischungen der erwähnten Substanzen einzusetzen, z.B. Natriumchlorid und Kaliumhydrogenphosphat.

Zur Behandlung von bereits dehydratisierten Fasern bzw. des entsprechenden Fasermaterials eignet sich besonders wäßriges Alkalihydroxid wie Natrium- oder Kaliumhydroxid.

Durch das erfindungsgemäße Verfahren erhält das Siliciumdioxid, das in den Kieselsäurefasern in amorpher Form vorliegt, eine mikrokristalline Struktur mit einem Anteil von mehr als 5 % Cristobalit. Die Größe und der Anteil der Cristobalitkristallite kann in weiten Bereichen schwanken und hängt von der Art und Menge des Behandlungsmittels und der Dehydratisierungstemperatur und -dauer ab. Ein bevorzugter Bereich für die Kristallitgröße ist 3 bis 35 nm (30 - 350 Å).

Die Konzentrationen der eingesetzten Behandlungsmittel, die insbesondere als wäßrige Lösung oder Dispersionen eingesetzt werden, können innerhalb verhältnismäßig weiter Grenzen variieren. Von Bedeutung ist, daß die Lösung das zu behandelnde Fasergut vollständig benetzt und daß gewährleistet ist, daß genügend Kristallisationsbeschleuniger auf die Faser aufgetragen wird. Es ist besonders günstig, wenn das Behandlungsmittel so dünnflüssig ist, daß in ihm die Fasern dispergiert werden können. Dies ist insbesondere bei Lösungen oder Dispersionen der Fall, die eine Konzentration des Behandlungsmittels von etwa 0,2 bis 20, vorzugsweise 1 bis 4 Gew.-% enthalten. Im übrigen hängen die geeigneten Konzentrationen in gewissem Maße auch von dem verwendeten Mittel ab, die von einem Durchschnittsfachmann an Hand von wenigen Versuchen ohne weiteres festgestellt werden können.

Bei Einsatz von wäßrigen Alkaliphosphatlösungen sind Konzentrationen von 0,5 bis 15, vorzugsweise 1,5 bis 5,0 Gew.-% geeignet. Das besonders für die dehydratisierten Siliciumdioxid-Fasern geeignete Natriumhydroxid wird als wäßrige Lösung mit Konzentrationen von 0,3 bis 6, vorzugsweise 0,6 bis 1,5 Gew.-% angewandt.

Die Aufnahme der Fasern an Behandlungsmittel hängt ebenfalls von der eingesetzten Lösung ab. Bei Natriumphosphat wird soviel Behandlungsmittel aufgenommen, daß der Na-Gehalt der trockenen und kristallisierten Fasern 0,3 bis 3,5 Gew.-% beträgt. Bei Verwendung von Natriumhydroxid ist die zur Verfügung stehende Natrium-Silikat-Menge darüber hinaus davon abhängig, inwieweit die Oberflächenreaktion bereits bei der Herstellung der Natronlauge-Faser-Dispersion, d.h. vor der Filtration und Formkörperbildung, fortschreitet. Im allgemeinen enthalten die Natriumhydroxid behandelten, getrockneten und kristallisierten Siliciumdioxid-Faser-Formteile 0,4 bis 3,2 Gew.-% Natrium.

In einer besonderen Ausführungsform der Erfindung kann das Siliciumdioxidfasermaterial auch hergestellt werden, indem man die Dehydratisierung vor der Behandlung mit dem die Bildung von Cristobalit aus amorpher Kieselsäure beschleunigenden Mittel durchführt, das Fasermaterial sodann mit dem Behandlungsmittel imprägniert und dann thermisch nachbehandelt. Die thermische Nachbehandlung kann bei dieser Ausführungsform auch zu einem späteren Zeitpunkt durchgeführt werden, z.B. während des Einsatzes des Materials z.B. zur Isolierung eines Ofens, der bei Temperaturen oberhalb 600° C gefahren wird.

Es war besonders überraschend, daß das erfindungsgemäße Verfahren zu hochtemperaturbeständigem Siliciumdioxidfasermaterial führt, das eine so hervorragende Hochtemperaturbeständigkeit aufweist. Während z.B. Vliese, welche aus bekannten keramischen Fasern, wie z.B. einer Aluminiumsilikatfaser auf der Basis von 51,3 Aluminiumoxid und 47,2 % Siliciumdioxidfaser hergestellt worden ist, einen Flächenschrumpf von etwa 23 % aufweisen und stark verspröden, wenn sie 1 Std. lang einer Temperatur von 1500° C ausgesetzt worden sind, liegt der Flächenschrumpf eines erfindungsgemäßen Vlieses bei gleicher Beanspruchung unter 2 %. Auch ist die Versprödung der Fasern sehr gering.

Die erfindungsgemäß hergestellten Siliciumdioxidfasermaterialien eignen sich insbesondere für die Hochtemperaturisolierung. So können diese Materialien bei Einsatzgebieten verwendet werden, wo Temperaturen über 1300° C auftreten und wo ein großes Bedürfnis nach entsprechend temperaturbeständigen Fasern besteht, das durch die bisher bekannten Fasern auf Siliciumdioxidbasis nicht gestillt werden konnte.

Da die Siliciumdioxidfasern eine geringere Dichte aufweisen als andere bekannte keramische Fasern, ist das Fasermaterial auch leichter und deshalb vorteilhafter einzusetzen. So können standfeste, gut handhabbare Platten mit sehr niedrigen Raumgewichten von z.B. 120 kg/m³ hergestellt werden.

Diese niedrige Dichte kommt auch der Isolierwirkung der aus diesen Fasern hergestellten Produkten zugute. Formteile aus den erfindungsgemäßen Fasern lassen sich problemlos sägen, schneiden und bohren, wodurch ihre praktische Anwendung erleichtert wird. So lassen sich Platten für die wärmeisolierende Auskleidung von Industrieöfen herstellen.

Ein weiteres Anwendungsgebiet ist die Filtration von z.B. heißen Gasen. Auch hierfür lassen sich in geeigneter Weise geformte Filter herstellen. Die erfindungsgemäßen sehr leichten und bei extremen Temperaturen beständigen Faserformteile sind auch von Interesse für die Luft-und Raumfahrt, so z.B. zur Konstruktion von Hitzeschilden, die beim Eintauchen von Weltraumflugkörpern in die Erdatmosphäre als Schutz benötigt werden. Von besonderer Bedeutung ist, daß die erfindungsgemäßen Fasern herstellungsbedingt einheitliche Durchmesser haben und sich insbesondere in dieser Hinsicht von nicht textilen Glas- und keramischen Fasern unterscheiden, die nach einem Blas- oder Schleuderprozeß hergestellt werden. Die erfindungsgemäßen Fasern können z.B. mit einem mittleren Durchmesser von 10 µm hergestellt werden, wobei der Streubereich sehr klein ist. Von großer Bedeutung ist ferner, daß Faserstaub aus diesen Fasern keine Anteile mit Durchmessern unter 3 µm enthält, die bekanntlich lungengängig sind und ein erhöhtes Gesundheitsrisiko bedeuten. Im übrigen ist es möglich, den Faserstaubanteil gemäß der Erfindung zu reduzieren.

Die Bestimmung des Gehalts der mikrokristallinen Bereiche an Cristobalit, der insbesondere als α-Cristobalit vorliegt, geschah nach einer röntgenographischen Methode, wie sie von P.H. Hermans, A. Weidinger und C. Natta sowie Mitarbeitern für die Bestimmung der kristallinen Bereiche in Hochpolymeren entwickelt wurde. Bezüglich der Grundlagen dieser Methoden wird auf folgende Literaturstellen verwiesen:

P.H. Hermans, A. Weidinger

J. Appl. Phys., 19, 491 (1948)

J. Polymer Sci, 4, 135 (1949)

J. Polymer Sci, 5, 565 (1950)

P.H. Hermans, A. Weidinger, Makromol.Chem., 44-46, 24 (1961)

P.H. Hermans, A. Weidinger, Makromol.Chem., 50, 98 (1961)

P.H. Hermans, Experimenta Vol. XIX, Fasc. 11, Pag. 553-564 15.11.63 "Röntgenographische Kristallinitätsbestimmung bei Hochpolymeren"

Diese Methode hat den Vorteil, daß keine Eichproben bekannter Kristallinität vorliegen müssen, sondern daß es ausreicht, wenn man Proben mit verschiedener Kristallinität hat.

Es wurden dabei die Röntgenbeugungsspektren der Proben aufgenommen und daraus die Flächen für die Streuung aus dem amorphen Teil $A_a$ und dem kristallinen Teil $A_k$ bestimmt. Wenn $A_k$ gegen $A_a$ aufgetragen wird, ergibt sich eine Gerade.

Proben verschiedener Kristallinität wurden durch Mischen einer amorphen Silica-Faser mit einer hochkristallinen, bei 1500° C getemperten Silica-Faser in einer Achatreibschale hergestellt. Damit sich die Proben in einer IR-Presse zu Tabletten pressen ließen, wurde ein Bindemittel zugefügt, und zwar 10 % einer wäßrigen Acrylatschlichte. Die Proben wurden bei 100° C getrocknet und zu Tabletten gepreßt. Die Tabletten hatten einen Durchmesser von 13 mm und einer Dicke von ca. 1 mm.

Die Messung wurde mit einem SIEMENS-Zählrohrgoniometer D 500 und einer Kupferröhre mit Nickelfilter durchgeführt. Das Spektrum wird im 2-Theta-Winkelbereich von 10° bis 40° in Schritten von 0,05° gemessen. Die Zählzeit pro Schritt beträgt 5 sec. Die gemessenen Impulszahlen werden in einem Rechner MACSYM 150 übertragen und dort über ein Computerprogramm ausgewertet und auf einem Plotter gezeichnet. Das Programm sucht die Peaks, legt den Untergrund unter den Peaks fest und integriert die Fläche der Peaks ($A_k$) und die Fläche des amorphen Untergrundes ($A_a$).

Für den Kristallisationsgrad von α-Cristobalit gilt folgende Gleichung:

$$KG = \frac{100}{1 + 1,5567 \cdot \dfrac{A_a}{A_k}}$$

Der Hochtemperaturschrumpf wurde auf folgende Weise bestimmt: Aus einem mit einem die Bildung von Cristobalit aus amorpher Kieselsäure beschleunigenden Mittel behandelten und bei Temperaturen über 600° C dehydratisierten Vlies aus Siliciumdioxidfasermaterial wird ein Vliesstück in Form eines Quadrats mit den Maßen 5 x 5 cm geschnitten. Dieses Vlies wird in Luft in einer Platinschale 1 Std. einer Temperatur von 1500° C ausgesetzt. Nach Abkühlung wird die Fläche des Vlieses vermessen. Die Flächenabnahme, bezogen auf die Ausgangsfläche, ausgedrückt in Prozent, ist der Hochtemperaturschrumpf.

Dieser Test ist auch bei Faserplatten anwendbar, indem man quadratische Teststücke 5 x 5 cm, Stärke 1 cm, aussägt.

Die Erfindung wird durch folgende Beispiele näher erläutert:

Beispiel 1
– – – – –

"Entsprechend Beispiel 3 der DE-OS 2 900 990 werden aus einem Natronwasserglas mit einer Molverhältniszahl $SiO_2/Na_2O$ = 2,48 Wasserglasfäden hergestellt. Das Wasserglas wird bei 70 °C und 280 mbar eingeengt, bis eine Viskosität von 240 Pa·s, gemessen bei 30 °C, erreicht ist und in einem 8 m langen Trockenspinnschacht versponnen. Abweichend von den im Beispiel genannten Daten beträgt die Zahl der Düsenbohrungen an Stelle von 24 60, und die Abzugsgeschwindigkeit an Stelle von 500 700 m/min. Die Wasserglasfäden werden zu Fasern von 6 mm Länge zerschnitten; jeweils 10 g dieser Fasern werden gemäß Beispiel 5 der DE-OS 2 900 990 1 min bei 25 °C mit Salzsäure behandelt. An Stelle der in der DE-OS angegebenen Säurekonzentration von 1 n wird mit einer Konzentration von 3 n gearbeitet. Man wäscht die Fäden mit destilliertem Wasser, bis das Waschwasser frei von $Cl^-$-Ionen ist. Die noch feuchten Kieselsäurefasern werden in einer wässrigen Lösung, die 2,7 Gew.-% $NaH_2PO_4$ enthält und deren pH-Wert durch Zusatz von 10 %iger NaOH auf 6,1 angehoben wurde, dispergiert und sodann auf einem Sieb zu einem vliesartigen Gebilde niedergeschlagen. Die Fasern werden durch Mikrowellenbestrahlung getrocknet und anschließend 10 min bei 1 000 °C dehydratisiert.

Das erhaltene Vlies ist sehr temperaturbeständig und zeigt bei einer Behandlung von 1 h bei 1 500 °C einen Flächenschrumpf von weniger als 3 %. Es ist flexibel und nicht spröde."

Beispiel 2
– – – – –

Beispiel 2 beschreibt die Herstellung einer Faserplatte. Nach Beispiel 1 werden Wasserglasfäden hergestellt und zu Kieselsäurefäden umgesetzt. Es ist nicht erforderlich, die Wasserglasfäden vor der Umsetzung auf eine konstante Länge zu zerschneiden.

Nach dem Waschen werden die Fasern in Wasser suspendiert und mit einem rotierenden Messerkranz "naßvermahlen", bis die Faserlängen im Bereich von etwa 80 bis 2000 µm liegen. Man trocknet die Fasern bei 120°C und dehydratisiert 10 Min. bei 1000°C.

730 g dieser Fasern werden in 15 l 0,6%iger Natronlauge dispergiert. Die Bildung der Platte erfolgt auf einem feinmaschigen Sieb, welches den Boden eines Saugkastens 25 x 35 cm, Höhe 20 cm bildet, nach Filtration bei ca. 150 mbar. Die nasse Platte enthält ca. 2000 g verdünnte Natronlauge. Nach Trocknung durch Mikrowellenbestrahlung wird die Platte zur Auslösung der Kristallisation 35 Min. bei 1000°C geglüht.

Das Raumgewicht der erhaltenen Faserplatte beträgt 160 kg/m³. sehr temperaturbeständig und zeigt nach einer 64-stündigen Behandlung bei 1500°C einen Flächenschrumpf von weniger als 3 %.

Je nach Behandlungsdauer, -mittel und Temperatur wurde weiteres Material mit Kristallisationsanteilen von 13, 23, 42, 65, 79, 87 und 97 % erhalten.

## Patentansprüche

1. Hochtemperaturbeständiges Siliciumdioxid-Fasermaterial aus durch Trockenverspinnen einer Lösung von Wasserglas, bei der das Verhältnis von $Na_2O$ zu $SiO_2$ in einem Bereich von 1 : 3 bis 1 : 1,9 liegt und die frei ist von Nichtalkalimetallverbindungen zu Wasserglasfasern und Umwandlung der Wasserglasfasern in Kieselsäurefasern durch Behandeln mit wäßrigen wasserstoffionenhaltigen Säuren oder Salzlösungen und anschließende Dehydratisierung erhaltenen Siliciumdioxid-Fasern mit einem Siliciumdioxid-Gehalt von mehr als 95 Gew.-%, einer Dichte von 1,9 bis 2,4 g/cm³, einem Gehalt von mikrokristallinem Cristobalit von mehr als 5%, und einem Hochtemperaturschrumpf, bestimmt als Flächenschrumpf an einem aus den Siliciumdioxid-Fasern bestehenden Vlies nach einer einstündigen Behandlung bei 1500°C von weniger als 5%.

2. Hochtemperaturbeständiges Siliciumdioxid-Fasermaterial nach Anspruch 1, gekennzeichnet durch einen Cristobalitgehalt von mehr als 10 %.

3. Hochtemperaturbeständiges Siliciumdioxid-Fasermaterial nach einem der Ansprüche 1 bis 2, gekennzeichnet durch einen Hochtemperaturschrumpf von weniger als 3 %.

4. Hochtemperaturbeständiges Siliciumdioxid-Fasermaterial nach einem der Ansprüche 1 bis 3, gekennzeichnet durch Siliciumdioxid-Fasern mit einem Siliciumdioxid-Gehalt von mehr als 98 Gew.-%.

5. Hochtemperaturbeständiges Siliciumdioxid-Fasermaterial nach Anspruch 4, gekennzeichnet durch Siliciumdioxid-Fasern mit einem Siliciumdioxid-Gehalt von mehr als 99 %.

6. Verfahren zur Herstellung von hochtemperaturbeständigem Siliciumdioxid-Fasermaterial nach Anspruch 1, dadurch gekennzeichnet, daß man Wasserglas, das frei von Nichtalkalimetallverbindungen ist und ein molares Verhältnis von $Na_2O$ : $SiO_2$ von 1 : 3 bis 1 : 1,9 aufweist, nach dem Trockenspinnverfahren zu Wasserglasfasern verspinnt, die Wasserglasfasern zur Umwandlung des Natriumsilicats in Kieselsäure mit wäßrigen, wasserstoffionenhaltigen Säure- oder Salzlösungen behandelt, die so erhaltenen Kieselsäurefasern wäscht, mit einem die Bildung von Cristobalit aus amorpher Kieselsäure beschleunigenden Mittel behandelt, die Fasern gegebenenfalls zu einem Formkörper verarbeitet, trocknet und bei Temperaturen über 600°C dehydratisiert.

7. Verfahren zur Herstellung von hochtemperaturbeständigem Siliciumdioxid-Fasermaterial nach Anspruch 1, dadurch gekennzeichnet, daß man Wasserglas, das frei von Nichtalkalimetallverbindungen ist und ein molares Verhältnis von $Na_2O$ : $SiO_2$ von 1 : 3 bis 1 : 1,9 aufweist, nach dem Trockenspinnverfahren zu Wasserglasfasern verspinnt, die Wasserglasfasern zur Umwandlung des Natriumsilicats in Kieselsäure mit wäßrigen, wasserstoffionenhaltigen Säure- oder Salzlösungen behandelt, die so erhaltenen Kieselsäurefasern bei Temperaturen über 600°C dehydratisiert, dann mit einem die Cristobalitbildung beschleunigenden Mittel behandelt und bei Temperaturen über 400°C zur Auslösung der Kristallisation thermisch nachbehandelt.

8. Verfahren nach Anspruch 6, dadurch gekennzeichnet, daß man die Dehydratisierung bei Temperaturen über 900°C durchführt.

9. Verfahren nach Anspruch 8, dadurch gekennzeichnet, daß man die Dehydratisierung bei Temperaturen von 950 bis 1050°C durchführt.

10. Verfahren nach einem der Ansprüche 6 oder 8 bis 9, dadurch gekennzeichnet, daß man die Kieselsäurefasern nach dem Einwirkenlassen des Behandlungsmittels durch Mikrowellenbestrahlung trocknet.

11. Verfahren nach einem der Ansprüche 6 bis 10, dadurch gekennzeichnet, daß man als ein die Bildung von Cristobalit aus amorpher Kieselsäure beschleunigenden Mittel Alkalimetallsalze mit Anionen verwendet, die ein Element aus der vierten bis siebten Hauptgruppe des Periodensystems enthalten

12. Verfahren nach Anspruch 11, dadurch gekennzeichnet, daß man wäßrige, auf einen pH-Wert von 5 bis 8 eingestellte Lösungen von Hydrogenphosphaten verwendet.

13. Verfahren nach einem der Ansprüche 6 und 8 bis 13, dadurch gekennzeichnet, daß man die Kieselsäurefasern vor dem Dehydratisieren zu einem Vlies oder einer Platte formt.

14. Verfahren nach Anspruch 7, dadurch gekennzeichnet, daß man bei Temperaturen über 600°C dehydratisierte Kieselsäurefasern in wäßrigen Alkalihydroxidlösungen dispergiert, zu einem Formkörper verarbeitet, durch Mikrowellenbestrahlung trocknet und zur Auslösung der Kristallisation bei Temperaturen über 400°C behandelt.

15. Verfahren nach Anspruch 7, dadurch gekennzeichnet, daß man die thermische Nachbehandlung bei Temperaturen über 600°C durchführt.

16. Verwendung des Siliciumdioxidfasermaterial nach einem der Ansprüche 1 bis 5 zur Hochtemperaturisolierung.

17. Verwendung nach Anspruch 16 zur Konstruktion von Hitzeschilden von Weltraumflugkörpern.

## Claims

1. High temperature resistant silicon dioxide fibre material of silicon dioxide fibres obtained by dry spinning a solution of waterglass in which the ratio of $Na_2O$ to $SiO_2$ is in a range of from 1 : 3 to 1 : 9 and which is free from non-alkali metal compounds to form waterglass fibres and conversion of the waterglass fibres into silica fibres by treatment with aqueous hydrogen ion-containing acids or salt solutions followed by dehydration, which silicon dioxide fibres have a silicon dioxide content of more than 95% by weight, a density of from 1.9 to 2.4 $g/cm^3$, a microcrystalline cristobalite content of more than 5% and a high temperature shrinkage of less than 5%, determined as surface shrinkage on a non-woven web consisting of the silicon dioxide fibres after one hour's treatment at 1500°C.

2. High temperature resistant silicon dioxide fibre material according to Claim 1, characterised by a cristobalite content of more than 10%.

3. High temperature resistant silicon dioxide fibre material according to one of the Claims 1 to 2, characterised by a high temperature shrinkage of less than 3%.

4. High temperature resistant silicon dioxide fibre material according to one of the Claims 1 to 3, characterised by silicon dioxide fibres having a silicon dioxide content of more than 98% by weight.

5. High temperature resistant silicon dioxide fibre material according to Claim 4, characterised by silicon dioxide fibres having a silicon dioxide content of more than 99%.

6. A process for the preparation of high temperature resistant silicon dioxide fibre material according to Claim 1, characterised in that waterglass which is free from non-alkali metal compounds and has a molar ratio of $Na_2O : SiO_2$ of from 1 : 3 to 1 : 1.9 is spun to waterglass fibres by the dry spinning process, the waterglass fibres are treated with aqueous, hydrogen ion-containing acid or salt solutions to convert the sodium silicate into silica, the resulting silica fibres are washed and treated with an agent which accelerates the formation of cristobalite from amorphous silica, and the fibres are optionally worked up into a moulded product, dried and dehydrated at temperatures above 600°C.

7. A process for the preparation of high temperature resistant silicon dioxide fibre material according to Claim 1, characterised in that waterglass which is free from non-alkali metal compounds and has a molar ratio of $Na_2O : SiO_2$ of from 1 : 3 to 1 : 1.9 is spun by the dry spinning process to form waterglass fibres, the waterglass fibres are treated with aqueous, hydrogen ion-containing acid or salt solutions for conversion of the sodium silicate into silica, the resulting silica fibres are dehydrated at temperatures above 600°C, then treated with an agent which accelerates cristobalite formation and thermally after-treated at temperatures above 400°C to release crystallisation.

8. A process according to Claim 6, characterised in that dehydration is carried out at temperatures above 900°C.

9. A process according to Claim 8, characterised in that dehydration is carried out at temperatures of from 950 to 1050°C.

10. A process according to one of the Claims 6 or 8 to 9, characterised in that the silica fibres are dried by irradition with microwaves after their treatment with the treatment agent.

11. A process according to one of the Claims 6 to 10, characterised in that the agent used for accelerating the formation of cristobalite from amorphous silica consists of alkali metal salts with anions containing an element from the fourth to seventh Main Group of the Periodic System.

12. A process according to Claim 11, characterised in that aqueous solutions of hydrogen phosphates adjusted to a pH of from 5 to 8 are used.

13. A process according to one of the Claims 6 and 8 to 13, characterised in that the silica fibres are formed into a non-woven web or a board before dehydration.

14. A process according to Claim 7, characterised in that silica fibres which have been dehydrated at temperatures above 600°C are dispersed in aqueous alkali metal hydroxide solutions, worked up into a moulded article, dried by microwave irradiation and treated at temperatures above 400°C to release crystallisation.

15. A process according to Claim 7, characterised in that the thermal after-treatment is carried out at temperatures above 600°C.

16. Use of the silicon dioxide fibre material according to one of the Claims 1 to 5 for high temperature insulation.

17. Use according to Claim 16 for the construction of heat shields of spacecraft.

**Revendications**

1. Matériau à base de fibres de dioxyde de silicium à haute température composé de fibres de dioxyde de silicum qui sont obtenues par filage à sec d'une solution de verre soluble, dans laquelle le rapport de $Na_2O$ à $SiO_2$ se situe dans une plage de 1:3 à 1:1,9 et qui ne comporte pas de composés métalliques non alcalins, pour former des fibres de verre soluble, et par transformation des fibres de verre soluble en fibres d'acide silicique par traitement au moyen de solutions aqueuses d'acides hydrogénés ou de sels, suivi d'une déshydratation dans laquelle la proportion de dioxyde de silicium est supérieure à 95 % du poids, la densité est comprise entre 1,9 et 2,4 $g/cm^3$, la proportion de cristobalite microcristalline est supérieure à 5 % et le retrait à haute température est inférieur à 5 %, défini comme étant le retrait surfacique d'un feutre composé de fibres de dioxyde de silicium après un traitement d'une heure à 1500° C.

2. Matériau à base de fibres de dioxyde de silicium à haute température selon la revendication 1, caractérisé par une proportion de cristobalite supérieure à 10 %.

3. Matériau à base de fibres de dioxyde de silicium à haute température selon l'une des revendications 1 à 2, caractérisé par un retrait à haute température inférieur à 3 %.

4. Matériau à base de fibres de dioxyde de silicium à haute température selon l'une des revendications 1 à 3, caractérisé par des fibre de dioxyde de silicium avec une proportion de dioxyde de silicium supérieure à 98 % du poids.

5. Matériau à base de fibres de dioxyde de silicium à haute température selon la revendication 4, caractérisé par des fibre de dioxyde de silicium avec une proportion de dioxyde de silicium supérieure à 99 % du poids.

6. Procédé de fabrication de matériau à base de fibres de dioxyde de silicium à haute température selon la revendication 1, caractérisé en ce qu'on file selon le procédé de filage à sec du verre soluble qui ne comporte pas de composés métalliques non alcalins et qui présente un rapport molaire de $Na_2:SiO_2$ de 1:3 à 1:1,9, pour former des fibres de verre soluble, on traite les fibres de verre soluble au moyen de solutions aqueuses d'acides hydrogénés ou de solutions de sels afin de transformer le silicate de sodium en acide silicique, on lave les fibres d'acide silicique obtenues et on les traite au moyen d'un produit accélérant la formation de cristobalite à partir d'acide silicique amorphe, on travaille le cas échéant les fibres pour obtenir un corps moulé, on les sèche et on les déshydrate à des températures supérieures à 600° C.

7. Procédé de fabrication de matériau à base de fibres de dioxyde de silicium à haute température selon la revendication 1, caractérisé en ce qu'on file selon le procédé de filage à sec du verre soluble, qui ne comporte pas de composés métalliques non alcalins et qui présente un rapport molaire de $Na_2:SiO_2$ de 1:3 à 1:1,9, pour former des fibres de verre soluble, on traite les fibres de verre soluble au moyen de solutions aqueuses d'acides hydrogénés ou de solutions de sels afin de transformer le silicate de sodium en acide silicique, on déshydrate les fibres d'acide silicique obtenues à des températures supérieures à 600° C, on les traite avec un produit accélérant la formation de cristobalite et on les soumet à un post-traitement thermique à des températures supérieures à 400° C pour déclencher la cristallisation.

8. Procédé selon la revendication 6, caractérisé en ce qu'on réalise la déshydratation à des températures supérieures à 900° C.

9. Procédé selon la revendication 8, caractérisé en ce qu'on réalise la déshydratation à des températures comprises entre 950 et 1050° C.

10. Procédé selon l'une des revendications 6 ou 8 à 9, caractérisé en ce qu'on sèche les fibres d'acide silicique par rayonnement micro-ondes après avoir laissé agir le produit de traitement.

11. Procédé selon l'une des revendications 6 à 10, caractérisé en ce qu'on utilise comme produit accélérant la formation de cristobalite à partir d'acide silicique amorphe des sels de métaux alcalins avec des anions, qui contiennent un élément appartenant aux groupes principaux 4 à 7 de la classification périodique des éléments.

12. Procédé selon la revendication 11, caractérisé en ce qu'on utilise des solutions aqueuses d'hydrogénophosphate avec un pH compris entre 5 et 8.

13. Procédé selon l'une des revendications 6 et 8 à 13, caractérisé en ce qu'on amène les fibres d'acide silicique sous forme d'un feutre ou d'une plaque avant leur déshydratation.

14. Procédé selon la revendication 7, caractérisé en ce qu'on disperse les fibres d'acide silicique déshydratées dans des solutions aqueuses d'hydroxyde alcalin à des températures supérieures à 600° C, on les transforme pour obtenir un corps moulé, on les sèche par rayonnement micro-ondes et on les traite à des températures supérieures à 400° C pour déclencher la cristallisation.

15. Procédé selon la revendication 7, caractérisé en ce qu'on réalise le post-traitement thermique à des températures supérieures à 600° C.

16. Utilisation du matériau à base de fibres de dioxyde de silicium selon l'une des revendications 1 à 5 pour l'isolation à haute tempéraure.

17: Utilisation selon la revendication 16 pour la construction de boucliers thermiques de véhicules spatiaux.